Europäisches Patentamt

European Patent Office

Office européen des brevets

(19)

(11) Numéro de publication: **0 112 768**
**B1**

(12) **FASCICULE DE BREVET EUROPEEN**

(45) Date de publication du fascicule du brevet: **11.05.88**

(51) Int. Cl.⁴: **G 06 F 7/52**

(21) Numéro de dépôt: **83402444.0**

(22) Date de dépôt: **16.12.83**

(54) **Opérateur élémentaire, notamment pour multiplieur du type en cascade.**

(30) Priorité: **23.12.82 FR 8221627**

(43) Date de publication de la demande:
**04.07.84 Bulletin 84/27**

(45) Mention de la délivrance du brevet:
**11.05.88 Bulletin 88/19**

(84) Etats contractants désignés:
**DE FR GB IT NL**

(56) Documents cités:

**PATENTS ABSTRACTS OF JAPAN, vol. 6, no. 8
(P-98)(886), 19 janvier 1982**

**NACHRICHTEN ELEKTRONIK, vol. 36, no. 3,
mars 1982, p. 106-119, Heidelberg, DE, V.
LEESEMANN: "Seriell/Parallel-Multiplizierer
für die digitale Signalverarbeitung, Teil 2"**

(73) Titulaire: **THOMSON-CSF
173, Boulevard Haussmann
F-75379 Paris Cédex 08 (FR)**

(72) Inventeur: **Muller, Bernard-Pierre
THOMSON-CSF SCPI 173, bld Haussmann
F-75379 Paris Cedex 08 (FR)**
Inventeur: **Charlec, Jean-Paul
THOMSON-CSF SCPI 173, bld Haussmann
F-75379 Paris Cedex 08 (FR)**

(74) Mandataire: **Desperrier, Jean-Louis et al
THOMSON-CSF SCPI 19, avenue de Messine
F-75008 Paris (FR)**

EP 0 112 768 B1

Courier Press, Leamington Spa, England.

# 0 112 768

**Description**

La présente invention se rapporte aux opérateurs élémentaires qui permettent d'effecteur très rapidement la multiplication d'un nombre binaire (multiplicande) par une petite partie d'un autre nombre binaire (multiplicateur). On peut associer ces opérateurs élémentaires de diverses manières, notamment en les mettant en cascade selon la structure connue sous le nom anglo-saxon de "pipe-line", pour obtenir en sortie du dernier le produit complet du multiplicande par le multiplicateur.

Le problème de la multiplication en binare est compliqué par l'usage -quasi général- de la représentation des nombres négatifs en complément à deux.

Dans son ouvrage "Automatic Digital Calculators" (London, Butterworths Scientific Publications, 1953) Booth a décrit un algorithme qui permet de résoudre ce problème en procédant à une suite d'opérations élémentaires entre le multiplicande et chacun des bits successifs du multiplicateur, compte tenu de la valeur du bit précédent.

Cet algorithme a depuis été généralisé pour pouvoir diviser le multiplicateur en groupes de bits et non plus en bits isolés. Un tel groupement complique bien entendu les opérations, et ceci d'autant plus que le nombre de bits groupés est important. Aussi dans la pratique on se contenté de diviser le multiplicateur en groups de deux bits.

D'autre par le document "Nachrichten Elektronik" vol. 36 No. 3, mars 1982, pages 106—109 décrit un opérateur élémentaire comportant un registre pour mémoriser un signal, des moyens de calcul et une porte logique OU-exclusif.

Selon l'invention l'opérateur élémentaire pour combiner un premier signal numérique entrant d'au moins n bits avec un deuxième signal numérique entrant comprenant un premier, un deuxième bits pour obtenir un signal numérique sortant avec un bit de retenue sortante, opérateur comprent:

—des moyens de calcul pour complémenter le premier signal, pour le décaler d'un pas à gauche en perdant le bit de poids fort, et pour complémenter cè premier signal décalé;

—un premier OU-exclusif pour recevoir le premier et le deuxième bits du deuxième signal numérique et délivrer un premier bit de fonction;

—un additioneur sur n bits;

—un premier registre pour mémoriser le premier signal et l'appliquer aux moyens de calcul de ce prermier signal, et est caractérisé en ce qu'il comprend:

—un troisième signal numérique de n bits;

—un premier multiplexeur 4 vers 1 pour sélectionner un signal entre le premier signal, le premier signal inversé, le premier signal décalé, et le premier signal décalé et inversé, sous la commande du troisième bit du troisième signal et du premier bit de fonction, et délivrer les n bits de poids forts du signal sélectionné;

—un deuxième OU-exclusif pour recevoir le deuxième et le troisième bits du troisième signal et délivrer un deuxième bit de fonction;

—un deuxième multiplexer 2 vers 1 pour sélectionner un signal entre le deuxième signal et la somme délivrée par l'additionneur, sous la commande de l'un ou de l'autre des deux bits de fonction, et délivrer le quatrième signal;

en ce que le deuxième signal numérique comporte en outre un troisième bit et un bit de retenue entrante, en ce que l'additionneur est susceptible d'effectuer l'addition du troisième signal numérique et du signal sélectionné par le premier multiplexeur avec un bit de retenue entrante et de délivrer la somme de ces signaux ainsi que le bit de retenue sortante et en ce que le premier registre (103) pour mémoriser le premier signal délivre un cinquième signal numérique sortant comportant les n bits de poids forts du premier signal.

D'autres particularités et avantages de l'invention apparaîtront clairement dans la description suivante présentée à titre d'exemple non limitatif et fait en regard des figures annexées qui représentent:

—la figure 1, un schéma d'un multiplier 7×2 selon l'invention;

—la figure 2, le plan d'un circuit intégré prédiffusé;

—les figures 3 à 12, le schéma de fonctions à intégrer dans le circuit de la figure 2;

—la figure 13, le schéma d'un calculateur de retenue rapide pour l'additionneur 110 de la figure 1.

Selon l'algorithme de Booth, une multiplication partielle de rang j entre un multiplicande $X$ et un groupe de deux bits $Y_{2j+1} Y_{2j}$ du multiplicateur, se fiat en ajoutant au résultat intermédiaire précédent $RI_{j-1}$ l'un des cinq nombres 0, $X$, $2X$, $-X$, $-2X$, et en décalant de deux bits vers la droite le résultat $S_j$ de cette opération pour obtenir un nouveau résultat intermédiaire $RI_j$. Le choix entre ces cinq nombres se fait selon la valeur des deux bits $Y_{2j+1}$, $Y_{2j}$, et du bit $Y_{2j-1}$ de groupe précédent, selon la table suivante:

2

| $Y_{2j+1}$ | $Y_{2j}$ | $Y_{2j-1}$ | Nombre à ajouter |
|---|---|---|---|
| 0 | 0 | 0 | 0 |
| 0 | 0 | 1 | X |
| 0 | 1 | 0 | X |
| 0 | 1 | 1 | 2X |
| 1 | 0 | 0 | −2X |
| 1 | 0 | 1 | −X |
| 1 | 1 | 0 | −X |
| 1 | 1 | 1 | 0 |

En traduisant cette table en fonctions logiques on obtient:

$$S_j = RI_{j-1} \cdot \overline{A} \ UA \ ((RI_{j-1}+X)(B \cdot \overline{C})U(RI_{j-1}+2X)$$

$$(\overline{B} \cdot \overline{C})U(RI_{j-1}-X)(B \cdot C)U(RI_{j-1}-2X)(\overline{B} \cdot C))$$

avec:

$$A=(Y_{2j} \oplus Y_{2j-1})U(Y_{2j+1} \oplus Y_{2j})$$

$$B=(Y_{2j} \oplus Y_{2j-1})$$

$$C=Y_{2j+1}$$

Dans ces expressions $\oplus$ désigne l'opérateur OU-exclusif.

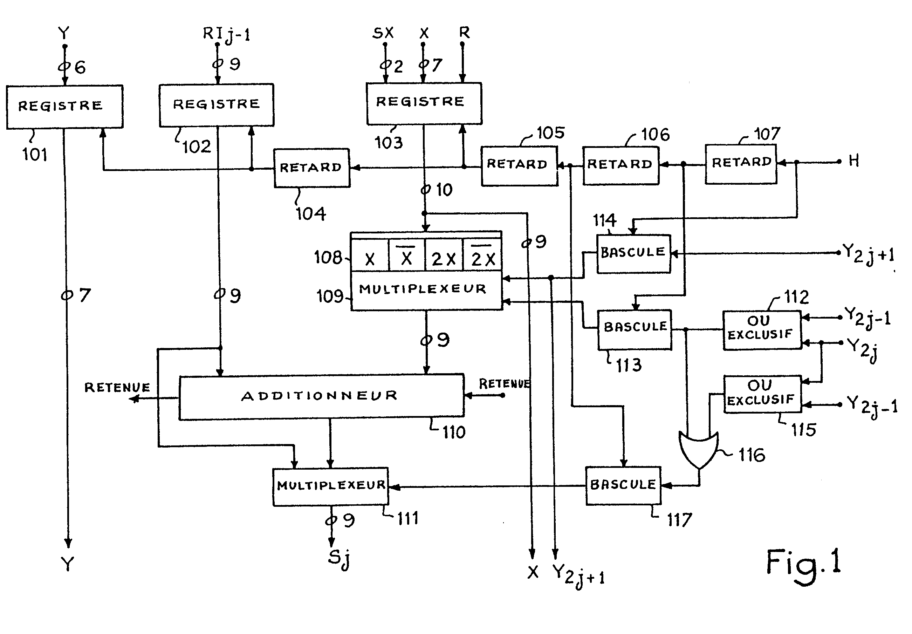

L'opérateur élémentaire représenté sur la figure 1 permet de réaliser une telle multiplication partielle entre un nombre X comportant sept bits (dont le ligne) et deux bits $Y_{2j+1}$ et $Y_{2j}$ d'un nombre Y, soit une multiplication 7×2 avec conservation du signe. En cascadent quatre de ces opérateurs, on peut réaliser une multiplication 7×8 avec conservation du signe sans aucun circuit supplémentaire.

L'opérateur de la figure 1 comprend trois registres d'entrée 101, 102, 103 qui permettent de recevoir les données en entrée.

Le registre 101 comprend sept cases qui permettent de mémoriser les bits de poids forts de Y non utilisés dans l'opérateur j ni dans ceux qui le précèdent. Les cases libérées par l'utilisation des bits de Y permettent de mémoriser les bits de poids faibles de la somme $S_j$, qui n'interviennent plus dans les calculs partiels ultérieurs par suite du décalage à droite dans l'algorithme de Booth.

Le registre est muni d'une sortie sur laquelle on trouve une recopie de l'entrée après le pas d'horloge H appliqué au registre par quatre dispositifs de retard 104 à 107 en série dont l'utilité ser expliquée plus loin. Pour simplifier, la figure représente le cas où l'on a en entrée, et donc en sortie, du registre les six bits de poids forts de Y.

Le registre 102 comprend neuf cases qui permettent de mémoriser les neuf bits de poids forts du résultat intermédiaire $RI_{j-1}$. Celui-ci est obtenu par décalage de deux bits vers la droite de la somme $S_{j-1}$ en sortie de l'étage précédent et adjonction de deux bits de poids forts égaux au bit de poids fort de $S_{j-1}$. Les deux bits de poids faibles qui débordent dans ce décalage sont rangés dans le registre 101 où ils replacent $Y_{2j}$ et $Y_{2j+1}$ qui arrivent dans l'opérateur par d'autres entrées que celles du registre 102. Celui-ci est aussi muni d'une sortie qui recopie son entrée sous la commande de H en sortie du dispositif à retard 104.

Ces différents décalages sont obtenus par câblage entre les deux opérateurs mis en cascade pour former deux étages successifs d'un multiplieur complet.

Le registre 103 comprend dix cases qui permettent de mémoriser les sept bits du nombre X, ainsi que trois bits supplémentaires. Ces bits supplémentaires comprennent un bit de poids faible, dit de recoupe, qui permet d'associer l'opérateur élémentaire selon d'autres schémas que ceux de la cascade. Les deux autres bits supplémentaires sont deux bits de poids forts qui recopient le bit de signe de X et permettent lors des opérations de garder ce signe. En effet l'opération 2X (ou −2X) se traduit par un décalage d'un bit à gauche, et il est de plus nécessaire de prévoir le cas où l'addition des signes délivre une retenue et donc nécessite encore un autre bit à gauche. Ce registre 103 est également muni d'une sortie qui recopie son entrée sous la commande de H en sortie du dispositif à retard 105.

Cette sortie du registre 103 est appliquée à un dispositif de calcul 108 suivi d'un multiplexeur 109. Ce dispositif de calcul effectue sur l'ensemble des dix bits les opérations X (transfert direct), $\overline{X}$ (complémentation bit à bit de X), 2X (décalage d'un bit à gauche), et $2\overline{X}$ (complémentation suivie d'un décalage à gauche). Le multiplexeur 109 sélectionne le résultat de l'une de ces quatre opérations sous la commande de deux signaux binaires qui représentent respectivement $Y_{2j+1}$ et B. Ces signaux sont obtenus

**0 112 768**

d'une manière décrite plus loin. Le multiplexeur est conçu pour ne sélectionner que les neuf bits de poids fort en éliminant ainsi le bit de recoupe qui a servi dans la multiplication par 2 et qui n'est plus utile ensuite.

Le nombre en sortie du multiplexeur 109 est additionné à $RI_{j-1}$, disponible en sortie du registre 102, dans un additionneur de neuf bits 110. Cet additionneur est muni d'une entrée et d'une sortie de retenue. Pour l'usage de l'opérateur en multiplieur 7×2 cascadable on applique, par câblage externe, le bit $Y_{2j+1}$ sur l'entrée de retenue de l'additionneur. En effet, comme on peut le voir dans le tableau ci-dessus définissant l'algorithme de Booth, l'addition de $-X$ et $-2X$ est à faire seulement lorsque $Y_{2j+1}=1$. Comme on dispose de $\overline{X}$ et $\overline{2X}$, en sortie du multiplexeur 109 dans ce cas, le fait de rajouter 1 par l'entrée de retenue donne bien $-X$ et $-2X$ en complément à 2, qui est le code utilisé.

La sortie de l'additionneur, ainsi que $RI_{j-1}$, sont appliqués à un multiplexeur 111 qui sélectionne l'un de ces deux signaux sous la commande du signal A, obtenu de la manière expliquée plus loin, et délivre le signal $S_j$.

Les deux bits $Y_{2j-1}$ et $Y_{2j}$, en provenance de l'étage précédent, sont appliqués à une porte OU-exclusif 112 qui délivre le signal $B=(Y_{2j}\oplus Y_{2j-1})$ défini plus haut. Ce signal B est mémorisé dans une bascule maître-esclave 113 pour être appliqué au multiplexeur 109. Cette bascule est commandée par l'horloge H en sortie du dispositif à retard 107.

Le bit $Y_{2j+1}$ en provenance de l'étage précédent est mémorisé dans une bascule maître-esclave 114 pour être appliqué au multiplexeur 109. Cette bascule est commandée par l'horloge H directement.

Les deux bits $Y_{2j}$ et $Y_{2j+1}$ sont également appliqués à une porte OU-exclusif 115 dont la sortie est connectée à une porte OU 116. L'autre entrée de cette porte reçoit le signal B, et sa sortie délivre le signal A défini plus haut. Ce signal A est mémorisé dans une bascule maître-esclave 117 pour être appliqué au multiplexeur 111. Cette bascule est commandée par l'horloge H en sortie du dispositif à retard 106.

Les signaux X et $Y_{2j+1}$, nécessaires pour l'étage suivant, sont disponibles en sortie du registre 103 et de la bascule 114, avec le retard d'un pas d'horloge qui correspond au chargement du registre et de la bascule et à l'échelonnement des calculs dans la suite des étages du multiplier en cascade. Il en est de même pour les signaux $Y_{2j+2}$ et $Y_{2j+3}$ (contenus dans Y) et $S_j$. Pour simplifier la figure on a représenté X sur neuf bits, ce qui inclut les deux bits de signe SX. Par contre le bit de recoupe R n'est pas disponible, parce qu'il n'y a pas d'utilité à le transmettre.

Les dispositifs à retard 104 à 107 tiennent compte des temps de réponse des circuits auxquels sont appliqués les signaux. Ceci permet, en remettant les signaux en phase, d'améliorer le comportement dynamique et le comportement en fréquence de l'opérateur élémentaire. Plus précisément en admettant un retard volontaire sur chacune des opérations des circuits, on les effectue toutes ensembles lorsque tous les signaux sont disponibles au même moment, et la vitesse de calcul après ce retard volontaire est alors bien plus grande, ce qui permet d'augmenter considérablement le débit. Ceci revient à utiliser au niveau de l'opérateur élémentaire le principe qui est à la base de la structure en cascade.

Il est particulièrement intéressant de fabriquer un tel opérateur élémentaire sous la forme d'un circuit intégré unique. En reliant en cascade quatre de ces circuits intégrés on aura un multiplieur 7×8 complet.

Une telle réalisation est encore plus intéressante si on utilise un réseau prédiffusé du commerce. On limite ainsi le nombre de masques à réaliser et il n'est pas nécessaire d'avoir de grandes séries pour réduire le coût des opérations. Par contre il faut choisir un circuit adéquat pour éviter de gaspiller des fonctions élémentaires et disposer d'un nombre suffisant d'entrées et de sorties.

Dans cette optique le schéma décrit plus haut a été particulièrement adapté pour être intégré dans un circuit prédiffusé connu du type MLA36 dans la technologie ECL100K de RTC qui offre en outre l'avantage d'être très rapide. Cette réalisation utilise les 58 entrées/sorties de ce circuit, 32 cellules internes sur 36, et l'ensemble des 22 cellules périphériques.

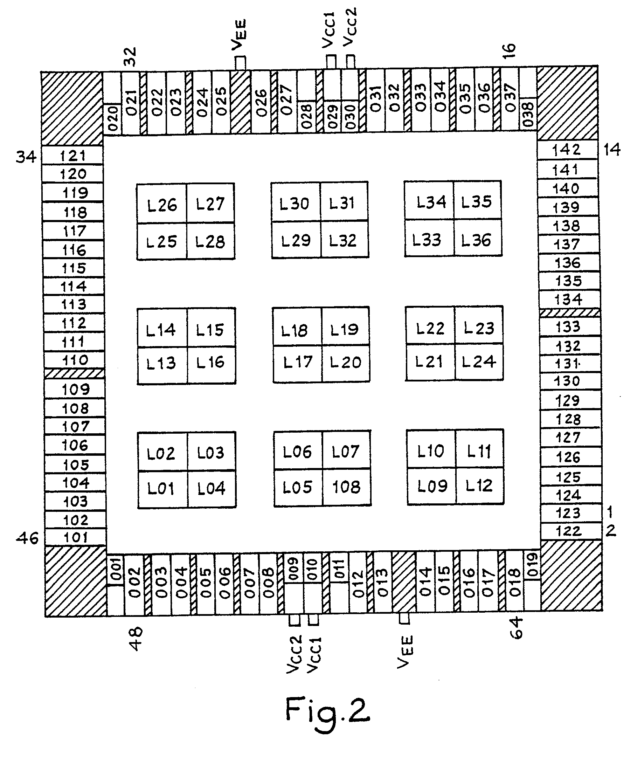

On a représenté sur la figure 2 le plan du circuit MLA36 avec les emplacements de 36 cellules internes L01 à L36 et 80 emplacements périphériques repérés I01 à I42 et O01 à O38. On peut placer 22 cellules périphériques aux emplacements I01 à I09, I13 à I15, I28 à I30, I34 à I36, O01, O09 à O11, O19, O20, O28 à O30, et O38. On peut placer des cellules d'entrée à tous les autres emplacements périphériques, et des cellules de sortie uniquement aux emplacements O02 à O08, O12 à O18, O21 à O27, et O31 à O37.

Dans la réalisation décrite on a utilisé les fonctions suivantes réalisées dans les cellules internes:

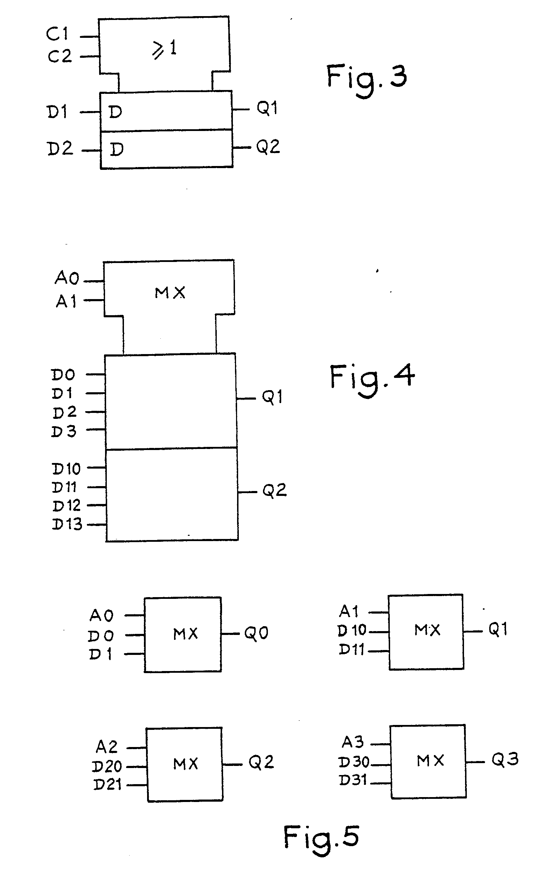

—Fonction HMS04 (figure 3) qui est une double bascule maître-esclave du type D avec horloge commune. L'horloge est munie de deux entrées distinctes fonctionnant en OU avec entrée des données sur les entrées D sur le niveau haut de l'horloge et transfert sur les sorties Q à la retombée de l'horloge.

—Fonction HMX05 (figure 4) qui est un double multiplexeur 4 vers 1 muni de deux entrées d'adressage A0, A1 communes aux deux multiplexeurs. Chacun de ces multiplexeurs comprend quatre entrées de données D0 à D3 pour l'un, et D10 à D13 pour l'autre, et une sortie Q1 pour l'un et Q2 pour l'autre. La sortie d'un multiplexeur recopie l'une de ses entrées de données selon la combinaison des états de ses deux entrées d'adressage.

—Fonctions HMX06 (figure 5) qui est un quadruple multiplexeur 2 vers 1 muni de quatre entrés d'adressage A0 à A3 distinctes pour chaque multiplexeur. Chaque multiplexeur est muni de deux entrées de données, soit D0 et D1, D10 et D11, D20 et D21, D30 et D31, et d'une sortie, soit Q0, Q1, Q2, Q3. La sortie d'un multiplexeur recopie l'une de ses entrées de données selon l'état de son entrée d'adressage.

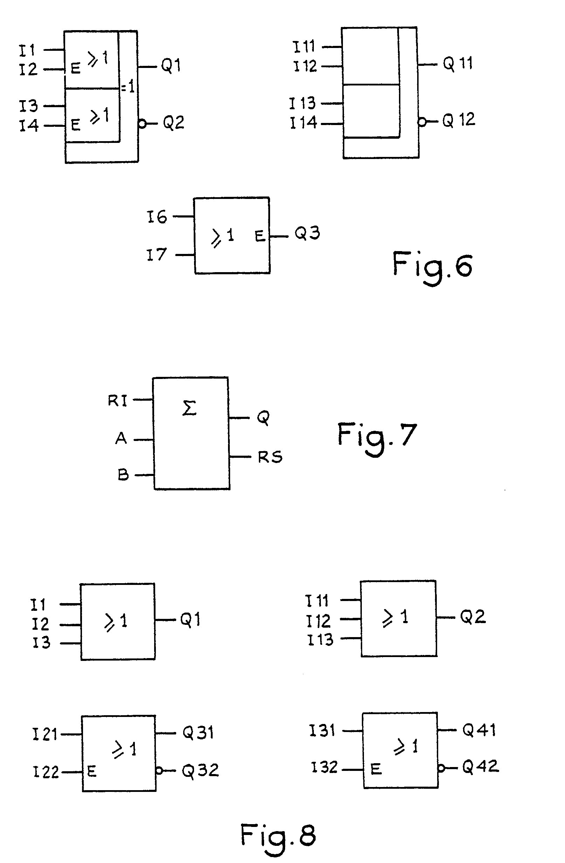

—Fonction HEX04 (figure 6) qui est un double OU-exclusif avec un expanseur simple à deux entrées. Chaque OU-exclusif est muni de deux entrées principales I1 et I3, I11 et I13, associées chacune à une entrée

4

d'expansion (I2 et I4, I12 et I14), et de deux sorties inverses l'une de l'autre (Q1 et Q2, Q11 et Q12). L'expanseur est muni de deux entrées I6 et I7 et d'une sortie non inverseuse Q3.

—Fonction HEX02 (figure 7) qui est un additionneur complet sur un bit, muni de trois entrées RI, A, B, pour les deux bits à additionner et la retenue, et de deux sorties Q et RS respectivement pour le résultat de l'addition et pour la retenue.

—Fonction HGT06 (figure 8) qui comprend deux portes NON-OU à trois entrées (I1, I2, I3 et I11, I12, I13) et une sortie (Q1 et Q2), et deux portes OU/NON-OU à une entrée normale (I21 et I31), une entrée d'expansion (I22 et I32) associée à l'entrée normale, et deux sorties inverses l'une de l'autre (Q31 et Q32, Q41 et Q42).

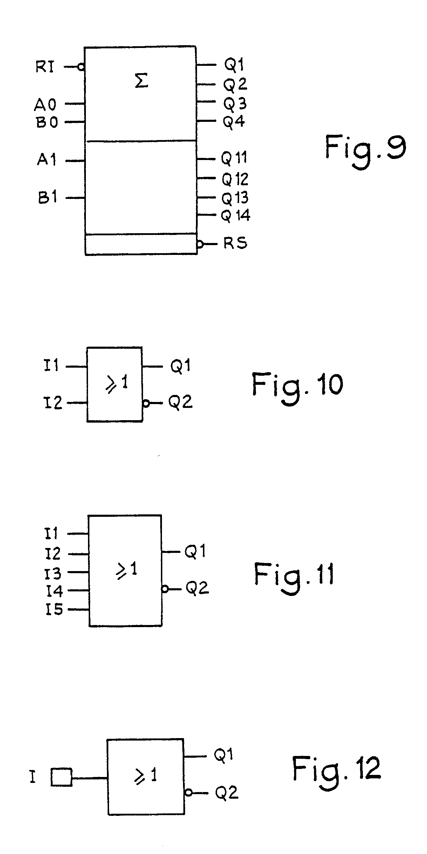

—Fonction HVA82 (figure 9) qui est un double additionneur complet sur deux nombres de deux bits. Elle comprend une entrée inversée de retenue RI, deux entrées A0 et A1 pour les deux bits de l'un des nombres à additionner, deux entrées B0 et B1 pour les deux bits de l'autre nombre, deux sorties Q1 et Q11 pour les deux bits de la somme obtenue, et une sortie inversée de retenue RS. Il comprend par ailleurs d'autres sorties qui permettent d'obtenir la fonction OU-exclusif de A0 et B0 sur la sortie Q2 et de A1 et B1 sur la sortie Q12, la fonction ET de A0 et B0 sur la sortie Q3 et de A1 et B1 sur la sortie Q13, et la fonction NOR de A0 et B0 sur la sortie Q4 et de A1 et B1 sur la sortie Q14.

Dans les cellules périphériques on a utilisé les fonctions suivantes:

—Fonction HGTE2 (figure 10) qui est une porte OU/NON-OU à deux entrées I1 et I2 et deux sorties Q1 et Q2 inverses l'une de l'autre.

—Fonction HGTA4 (figure 11) qui est une porte OU/NON-OU à cinq entrées I1 à I5 et deux sorties Q1 et Q2 inverses l'une de l'autre.

Dans les emplacements d'entrée/sortie on a utilisé les fonctions suivantes:

—Fonction HITE1 (figure 12) qui est un adaptateur de niveau d'entrée entre la logique ECL et la logique interne du circuit. Il comprend une entrée I et deux sortie Q1 et Q2 inverses l'une de l'autre.

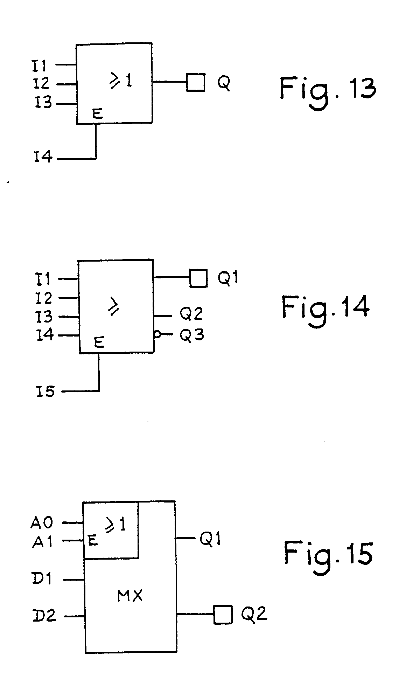

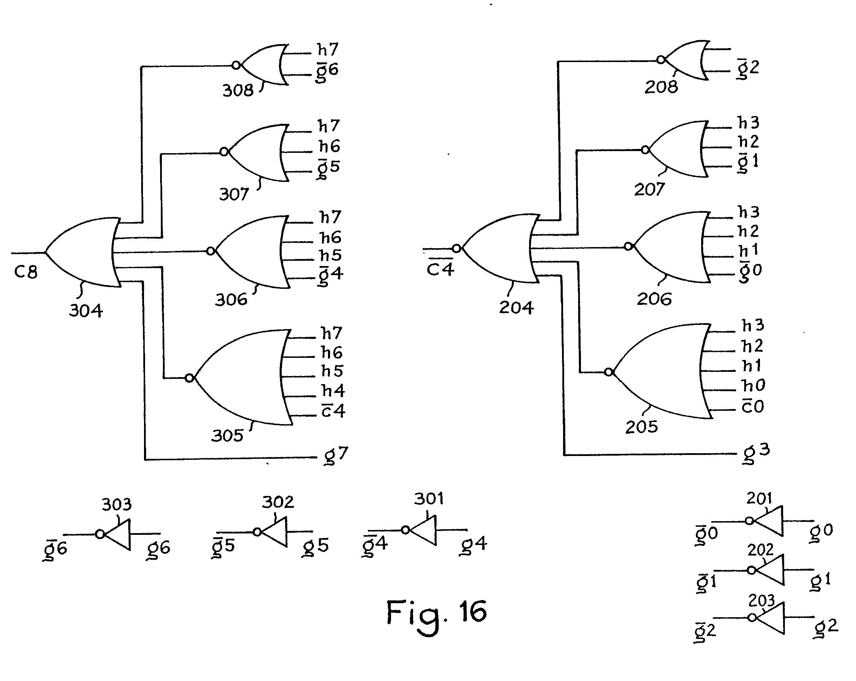

—Fonction HOTA5 (figure 13) qui est une porte de sortie NON-OU à trois entrées I1 à I3, plus une entrée d'expansion I4 et une sortie Q, qui réalise en plus une adaptation de niveau vers la logique ECL extérieure au circuit.

—Fonction HOTA7 (figure 14) qui est une porte de sortie NON-OU à quatre entrées I1 à I4, plus une entrée d'extension I5 et une sortie Q1, qui réalise en plus une adaptation de niveau vers la logique ECL extérieure au circuit. Elle comprend en outre deux sorties supplémentaires inverses l'une de l'autre Q2 et Q3 qui sont au niveau logique interne et qui peuvent être rebouclée vers l'intérieur du circuit.

—Fonction HMXA1 (figure 15) qui est un multiplexeur de sortie 2 vers 1 muni d'un entrée de commande A0, d'une entrée d'expansion de commande A1, de deux entrées de données D1 et D2, et de deux sorties Q1 et Q2. Selon l'état des entrées de commande, l'une des entrées de données est recopiée sur les sorties. La sortie Q1 est au niveau de logique interne, alors que la sortie Q2 réalise l'adaptation pour obtenir le niveau ECL externe.

—Fonction HITA3 qui est fonctionellement identique à la fonction HITE1, mais est implantée (ce qui est autorisé) sur un emplacement de sortie.

A partir de ces fonctions, l'implantation de l'opérateur représenté en figure 1 est alors réalisée de la manière suivante:

Entrée et sorte des 7 bis $Y_8$ à $Y_2$:

| Entrée | Emplacement | Fonction | Sortie | Emplacement | Fonction |
|--------|-------------|----------|--------|-------------|----------|
| $Y_8$ | I16 | HITE1 | $Y_8$ | 027 | HOTA5 |
| $Y_7$ | I17 | HITE1 | $Y_7$ | 026 | HOTA5 |
| $Y_6$ | I18 | HITE1 | $Y_6$ | 025 | HOTA5 |
| $Y_5$ | I19 | HITE1 | $Y_5$ | 024 | HOTA5 |
| $Y_4$ | I20 | HITE1 | $Y_8$ | 023 | HOTA5 |
| $Y_3$ | I21 | HITE1 | $Y_3$ | 022 | HOTA5 |
| $Y_2$ | I42 | HITE1 | $Y_2$ | 021 | HOTA5 |

Entrée et sortie des bits $SX_1$, $SX_0$, $X_6$ à $X_0$, R:

| Entrée | Emplacement | Fonction | Sortie | Emplacement | Fonction |
|---|---|---|---|---|---|
| $SX_1$ | I40 | HITE1 | $SX_1$ | 033 | HOTA7 |
| $SX_0$ | I41 | HITE1 | $SX_0$ | 032 | HOTA7 |
| $X_6$ | I39 | HITE1 | $X_6$ | 034 | HOTA7 |
| $X_5$ | I38 | HITE1 | $X_5$ | 035 | HOTA7 |
| $X_4$ | I37 | HITE1 | $X_4$ | 036 | HOTA7 |
| $X_3$ | I32 | HITE1 | $X_3$ | 037 | HOTA7 |
| $X_2$ | I31 | HITE1 | $X_2$ | 016 | HOTA7 |
| $X_1$ | I27 | HITE1 | $X_1$ | 017 | HOTA7 |
| $X_0$ | I26 | HITE1 | $X_0$ | 018 | HOTA7 |
| R | I25 | HITE1 | | | |

Entrée des bits $RI_{j-1,8}$ à $RI_{j-1,0}$

| Entrée | Emplacement | Fonction |
|---|---|---|
| $RI_{j-1,8}$ | I11 | HITE1 |
| $RI_{j-1,7}$ | I12 | HITE1 |
| $RI_{j-1,6}$ | I10 | HITE1 |
| $RI_{j-1,5}$ | I06 | HITE1 |
| $RI_{j-1,4}$ | I05 | HITE1 |
| $RI_{j-1,3}$ | I04 | HITE1 |
| $RI_{j-1,2}$ | I03 | HITE1 |
| $RI_{j-1,1}$ | I02 | HITE1 |
| $RI_{j-1,0}$ | I01 | HITE1 |

—Multiplexeur 111 délivrant les bits $S_{j,8}$ à $S_{j,0}$:

| Sortie | Emplacement | Fonction |
|---|---|---|
| $S_{j,8}$ | 014 | HMXA1 |
| $S_{j,7}$ | 013 | HMXA1 |
| $S_{j,6}$ | 012 | HMXA1 |
| $S_{j,5}$ | 008 | HMXA1 |
| $S_{j,4}$ | 007 | HMXA1 |
| $S_{j,3}$ | 005 | HMXA1 |
| $S_{j,2}$ | 004 | HMXA1 |
| $S_{j,1}$ | 003 | HMXA1 |
| $S_{j,0}$ | 002 | HMXA1 |

—Le bit de retenue entrante est appliqué à l'emplacement O06 qui contient une fonction HITA3.

—Le bit de retenue sortante est appliqué à l'emplacement O31 qui contient une fonction HOTA5.

—L'horloge est appliquée à l'emplacement I33 qui contient une fonction HITE1.

—Les trois bits $Y_{2j-1}$, $Y_{2j}$, $Y_{2j+1}$ du multiplicateur sont entrés de la manière suivante:

| Entrée | Emplacement | Fonction |
|---|---|---|
| $Y_{2j+1}$ | I24 | HITE1 |
| $Y_{2j}$ | I23 | HITE1 |
| $Y_{2j-1}$ | I22 | HITE1 |

Pour disposer en sortie du bit $Y_{2j+1}$, on utilise une fonction HOTA5 à l'emplacement O15.

—les registres 101, 102, et 103 sont réalisés à partir de treize fonctions HMSO4 implantées de la manière suivante:

| Emplacement | Bits enregistrés | |
|---|---|---|
| L11 | R | $X_0$ |
| L24 | $X_2$ | $X_1$ |
| L23 | $X_3$ | $X_4$ |
| L36 | $X_5$ | $X_6$ |
| L35 | $X_7$ | $X_8$ |
| L01 | $RI_{j-1,0}$ | $RI_{j-1,1}$ |
| L02 | $RI_{j-1,2}$ | $RI_{j-1,3}$ |
| L13 | $RI_{j-1,4}$ | $RI_{j-1,5}$ |
| L14 | $RI_{j-1,6}$ | $RI_{j-1,7}$ |
| L25 | $RI_{j-1,8}$ | $Y_2$ |
| L26 | $Y_3$ | $Y_4$ |
| L27 | $Y_5$ | $Y_6$ |
| L28 | $Y_7$ | $Y_8$ |

—Le multiplexeur 109 est réalisé à partir de quatre fonctions HMX05 (double multiplexeur 4 vers 1) implantées aux emplacements L10, L21, L22, L33, et d'une fonction HMX06 (quadruple multiplexeur 2 vers 1) implantée à l'emplacement L34 et câblée extérieurement pour obtenir un multiplexeur 4 vers 1. Les quatre entrées de chaque multiplexeur reçoivent l'une des mots X, 2X, $\overline{X}$, $2\overline{X}$.

—Le circuit 108 qui permet d'obtenir ces mots est obtenu pour X et 2X par câblage direct à partir du registre 103, puisque 2X s'obtient par un décalage d'un pas à gauche. Pour $\overline{X}$ et $2\overline{X}$ on utilise pour inverser les neuf bits de poids forts la sortie interne inversée des fonctions HOTA7 qui servent à obtenir ces bits en sortie de l'opérateur. Pour le bit de poids faible (R), qui n'est pas disponible sur une sortie, on utilise une fonction HGTE2 implantée sur l'emplacement périphérique I29.

—L'additionneur 110 est réalisé, dans un premier mode de réalisation, avec quatre fonctions HVA82 implantées sur les emplacements L04—L03, L16—L15, L17—L18, L29—L30, (cette fonction nécissite deux emplacements) qui délivrent dans cet ordre les huit premiers bits (poids faibles en premier) du résultat de l'addition, et une fonction HEX02 implantée sur l'emplacement L32, qui délivre le bit de poids fort et le bit de retenue sortante. Le calcul de la retenue se fait par propagation d'étage en étage.

Dans un deuxième mode de réalisation on effectue le calcul de la retenue de manière anticipée par tranches de quatre bits.

Pour cela on utilise les sorties supplémentaires de la fonction HVA82.

Pour une tranche de quatre bis, si on note C0 la retenue entrante, g0, g1, g2, g3 les fonctions ET des deux opérandes bit à bit par ordre croissant, et p0, p1, p2, p3 les fonctions OU-exclusif de ces mêmes opérantes, la retenue sortante C4 est donnée par:

$$C4 = g3 \cup p3\,g2 \cup p3\,g2\,g1 \cup p3\,p2\,p1\,g0 \cup p3\,p2\,p1\,p0\,C0$$

## 0 112 768

En notant h0, h1, h2, h3 les fonctions NON-OU des deux opérandes, on peut transformer cette relation à l'aide des relations suivantes:

$$p3\ g2=\overline{h3\ U\ \overline{g2}}$$

$$p3\ p2\ g1=\overline{h3\ U\ h2\ U\ \overline{g1}}$$

$$p3\ p2\ p1\ g0=\overline{h3\ U\ h2\ U\ h1\ U\ \overline{g0}}$$

$$p3\ p2\ p1\ p0\ C0=\overline{h3\ U\ h2\ U\ h1\ U\ h0\ U\ \overline{C0}}$$

La fonction permettant d'obtenir C4 est alors obtenue selon le schéma de la figure 13 avec trois inverseurs 201, 202, 203, trois portes NON-OU à cinq entrées 204, 205, 206, une porte NON-OU à trois entrées 207 et une porte NON-OU à deux entrées 208.

De même la fonction permettant d'obtenir C8 pour l'autre tranche de quatre bits est obtenue avec les circuits 301 à 308.

Les bits g et h sont obtenus à partir des fonctions HVA 82 implantées comme dans la première réalisation.

Les circuits 207, 208, 307, 308 sont obtenus avec une fonction HGT06 implantée à l'emplacement L19.

Les circuits 204, 205, 206, 304, 305, 306 sont obtenus avec six fonctions HGTA4 implantées aux emplacements périphériques O10, O09, O11, O28, O29, O30.

Les circuits 201, 202, 203, 301, 302, 303 sont obtenus avec six fonctions HGTE2 implantées aux emplacements I07, I08, I09, I13, O01, O20.

—Le décodeur de commande des multiplexeurs 109 et 111, comprenant les circuits 112 à 117, est réalisé avec les fonctions suivantes:

| Circuit | Emplacement | Fonction |
|---|---|---|
| 112 ⎫<br>  ⎬ 115 ⎭ | L12 | HEX04 |
| 116 | I28 | HGTE2 |
| 114 | L09 | HMS04 |
| 113 | L08 | HMS04 |
| 117 | L07 | HMS04 |

—Les dispositifs de retard sont réalisés de la manière suivante:

Le dispositif 107 (retard 1,5 ns) comprend trois fonctions HGTE2 en série, implantées aux emplacements périphériques I36, I35, I34.

Le dispositif 106 (retard 0,5 ns) est réalisé avec les parties non utilisées de la fonction HMX06 implantée à l'emplacement L34.

Le dispositif 105 (retard 0,5 ns) comprend trois fonctions HGTE2 en parallèle pour disposer d'une sortance suffisante, implantées aux emplacements périphériques I14, I15, I30.

Le dispositif 104 (retard 1 ns) comprend deux fonctions HGTE2 en série, implantées aux emplacements périphériques O19 et O38.

### Revendications

1. Opérateur élémentaire pour combiner un premier signal numérique entrant d'au moins n bits (SX, X) avec un deuxième signal numérique entrant comprenant un premier, un deuxième bits ($Y_{2j-1}$, $Y_{2j}$) pour obtenir un signal numérique sortant avec un bit de retenue sortante, ledit opérateur comprenant:

—des moyens de calcul (108) pour complémenter ($\overline{X}$) le premier signal, pour le décaler d'un pas à gauche (2X) en perdant le bit de poids fort, et pour complémenter ($\overline{2X}$) ce premier signal décalé;

—un premier OU-exclusif (112) pour recevoir le premier et le deuxième bits ($Y_{2j-1}$, $Y_{2j}$) du deuxième signal numérique et délivrer un premier bit de fonction;

—un additionneur (110) sur n bits;

—un premier registre (103) pour mémoriser le premier signal et l'appliquer aux moyens de calcul (108) de ce premier signal, caractérisé en ce qu'il comprend:

—un troisième signal numérique entrant de n bits ($RI_{j-1}$);

—un premier multiplexeur 4 vers 1 (109) pour sélectionner un signal entre le premier signal, le premier signal inversé, le premier signal décalé, et le premier signal décalé et inversé, sous la commande du troisième bit du troisième signal et du premier bit de fonction, et délivrer les n bits de poids forts du signal sélectionné;

—un deuxième OU-exclusif (115) pour recevoir le deuxième et le troisième bits du troisième signal et délivrer un deuxième bit de fonction;

—un deuxième multiplexeur 2 vers 1 (111) pour sélectionner un signal entre le deuxième signal et la somme délivrée par l'additionneur, sous la commande de l'un ou de l'autre des deux bits de fonction, et délivrer le quatrième signal;

en ce que le deuxième signal numérique comporte en outre un troisième bit ($Y_{2j+1}$) et un bit de retenue entrante en ce que l'additionneur est susceptible d'effectuer l'addition du troisième signal numérique et du signal sélectionné par le premier multiplexeur avec un bit de retenue entrante et de délivrer la somme de ces signaux ainsi que le bit de retenue sortante et que le premier registre (103) pour mémoriser le premier signal délivre un cinquième signal numérique sortant comportant les n bits de poids forts du premier signal.

2. Opérateur selon la revendication 1, caractérisé en ce que les moyens (108) pour décaler d'un pas à gauche (2X) le premier signal, pour complémenter ($\overline{X}$) le premier signal, et pour complémenter ($\overline{2X}$) le premier signal décalé, comprennent en outre des moyens pour traiter un bit supplémentaire de recoupe (R) formant le bit de poids faible du premier signal numérique entrant, lequel comprend alors n+1 bits.

3. Opérateur selon l'une quelconque des revendications 1 ou 2, caractérisé en ce qu'il comprend;

—un deuxième registre (102) pour mémoriser le troisième signal et l'appliquer à l'additionneur (110) et au deuxième multiplexeur (111);

—un troisième registre (101) pour mémoriser un sixième signal entrant de n–2 bits (Y) et délivrer une septième signal numérique de sortie identique au sixième signal;

—une première bascule (114) pour mémoriser le troisième bit du deuxième signal numérique, l'appliquer au premier multiplexeur (109) et le délivrer en sortie de l'opérateur;

—une deuxième bascule (113) pour mémoriser le premier bit de fonction et l'appliquer au premier multiplexeur;

—une porte OU (116) pour rassembler les deux bits de fonction;

—une troisième bascule (117) connectée à la sortie de la porte OU et à l'entrée de commande de deuxième multiplexeur (111).

4. Opérateur selon la revendication 3, caractérisé en ce qu'il comprend en outre trois dispositifs de retard (104—107) mis en séie pour retarder le signal d'horloge qui commande les circuits de l'opérateur selon des valeurs déterminées pour faire fonctionner l'ensemble de ces circuits en phase ce qui augmente le débit de l'opérateur au prix d'un retard volontaire des opérations, et que le signal d'horloge est appliqué directement à la première bascule (114), après un premier retard à la deuxième bascule (113), après un deuxième retard à la troisième bascule (117), après un troisième retard au premier registre (103), et après un quatrième retard aux deuxième et troisième registres (101, 102).

5. Opérateur selon l'une quelconque des revendications 1 à 4, caractérisé en ce qu'il comprend en outre une connexion permettant d'utiliser comme bit de retenue entrante le troisième bit ($Y_{2j+1}$) du deuxième signal numérique entrant, ce qui permet de faire fonctionner l'opérateur élémentaire comme un multiplieur (n–2)×2 en utilisant pour le premier signal numérique entrant un multiplicande formé de n–2 bits signés complétés par deux bits de poids forts répétant le signe, pour le troisième signal numérique entrant un nombre formant le résultat intermédiaire d'une structure en cascade éventuelle, pour les deux derniers bits du deuxième signal numérique entrant les deux bits d'un multiplicateur, et pour le premier bit de ce deuxième signal le bit de poids fort de la tranche de deux bits précédente du multiplicateur dans la structure en cascade; ce multiplieur fonctionnant ainsi selon l'algorithme de Booth.

6. Opérateur selon l'une quelconque des revendications 1 à 5, caractérisé en ce que le nombre n est égal à 9 et qu'il est intégré dans un réseau prédiffusé du type MLA36.

## Patentansprüche

1. Elementarer Operator zum Kombinieren eines ersten ankommenden digitalen Signals aus wenigstens n Bits (SX, X) mit einem zweiten ankommenden digitalen Signal, die ein erstes und den zweites Bit ($Y_{2j-1}$, $X_{2j}$) enthalten, um ein abgehendes digitales Signal mit einem abgehenden Übertrag-Bit zu erhalten, wobei der genannte Operator enthält:

— Rechenmittel (108) zum Komplementieren ($\overline{X}$) des ersten Signals, um es um einen Schritt nach Links (2X) zu verschieben, wobei das hochwertige Bit verloren geht, und zum Komplementieren ($\overline{2X}$) dieses ersten verschobenen Signals;

— eine erste Exklusiv-OR-Einheit (112) zum Empfangen des ersten und des zweiten Bits ($Y_{2j-1}$, $Y_{2j}$) des zweiten digitalen Signals und Ausgeben eines ersten Funktionsbits;

— einen Addierer (110), der über n Bits addiert;

— ein erstes Register (103) zum Speichern des ersten Signals und Anlegen desselben an die Rechenmittel (108) für dieses erste Signal, dadurch gekennzeichnet, daß er umfaßt:

— ein drittes ankommendes digitales Signal aus n Bits ($RI_{j-1}$);

—einen ersten 4-auf-1-Multiplexer (109) zum Auswählen eines Signals unter dem ersten Signal, dem invertierten ersten Signal, dem verschobenen ersten Signal und dem verschobenen und invertierten ersten Signal unter Steuerung durch das dritte Bit des dritten Signals und des ersten Funktionsbits, um die n hochwertigen Bits des ausgewählten Signals auszugeben;

—eine zweite Exklusiv-OR-Einheit (115) zum Empfangen des zweiten und des dritten Bits des dritten Signals und Ausgeben eines zweiten Funktionsbits;

—einen zweiten 2-auf-1-Multiplexer (111) zum Auswählen eines Signals unter dem zweiten Signal und der vom Addierer abgegebenen Summe unter der Steuerung durch das eine oder andere der zwei Funktionsbits, zum Ausgeben des vierten Signals;

—daß das zweite digitale Signal ferner ein drittes Bit ($Y_{2j+1}$) und ein ankommendes Übertrag-Bit enthält, daß der Addierer die Addition des dritten digitalen Signals und des durch den ersten Multiplexer ausgewählten Signals mit einem ankommenden Übertrag-Bit ausführen und die Summe dieser Signale sowie das abgehende Übertrag-Bit ausgeben kann, und daß das erste Register (103) zur Speicherung des ersten Signals ein fünftes abgehendes digitales Signal ausgibt, welches die n hochwertigen Bits des ersten Signals enthält.

2. Operator nach Anspruch 1, dadurch gekennzeichnet, daß die Mittel zur Verschiebung des ersten Signals um einen Schritt nach links (2X) zum Komplementieren ($\overline{X}$) dieses ersten Signals und zum Komplementieren ($\overline{2X}$) des verschobenen ersten Signals weiterhin Mittel enthalten, um ein zusätzliches Überschneidungsbit (R) zu verarbeiten, welches das niedrigwertige Bit des ersten ankommenden digitalen Signals bildet, das dabei n+1 Bits aufweist.

3. Operator nach Anspruch 1 oder 2, dadurch gekennzeichnet, daß er umfaßt:

—ein zweites Register (102) zum Speichern des dritten Signals und Anlegen desselben an den Addierer (110) und an den zweiten Multiplexer (111);

—ein drittes Register (101) zum Speichern eines sechsten ankommenden Signals aus n−2 Bits (Y) und Ausgeben eines siebten digitalen Ausgangsignals, das mit dem sechsten Signal übereinstimmt;

—eine erste Kippschaltung (114) zum Speichern des dritten Bits des zweiten digitalen Signals, Anlegen desselben an den ersten Multiplexer (109) und Ausgeben desselben am Ausgang des Operators;

—eine zweite Kippschaltung (113) zum Speichern des ersten Funktionsbits und Anlegen desselben an den ersten Multiplexer;

—eine OR-Torschaltung (116) zur Entgegennahme der zwei Funktionsbits;

—eine dritte Kippschaltung (117), die an den Ausgang der OR-Torschantlung und an den Steuereingang des zweiten Multiplexers (111) angeschlossen ist.

4. Operator nach Anspruch 3, dadurch gekennzeichnet, daß er ferner drei Verzögerungsvorrichtungen (104—107) enthält, die in Reihe geschaltet sind, um das Taktsignal zu verzögern, welches die Schaltungen des Operators mit bestimmten Werten verzögert, damit die Gesamtheit dieser Schaltungen phasengleich arbeitet, wodurch der Durchsatz des Operators unter Inkaufnahme einer gewollten Verzögerung der Operationen gesteigert wird, und daß das Taktsignal direkt an die erste Kippschaltung (114), mit einer ersten Verzögerung an die zweite Kippschaltung (113), mit einer zweiten Verzögerung an die dritte Kippschaltung (117), mit einer dritten Verzögerung an das erste Register (103) und mit einer vierten Verzögerung an das zweite und an das dritte Register (101, 102) angelegt wird.

5. Operator nach einem der Ansprüche 1 bis 4, dadurch gekennzeichnet, daß er ferner eine Verbindung aufweist, die es ermöglicht, als ankommendes Übertrag-Bit das dritte Bit ($Y_{2j+1}$) des zweiten ankommenden digitalen Signals zu verwenden, wodurch es ermöglicht wird, den elementaren Operator als (n−2)×2-Multiplikator zu betreiben, indem für das erste ankomme digitale Signal ein Multiplikand verwendet wird, der aus n−2 Bits gebildet ist, die mit Vorzeichen versehen und vervollständigt sind durch zwei hochwertige Bits, die das Vorzeichen wiederholen, für das dritte digitale ankommende Signal eine Zahl verwendet wird, welche das Zwischenergebnis einer eventuellen Kaskadenstruktur bildet, für die letzten zwei Bits des zweiten ankommenden digitalen Signals die zwei Bits eines Multiplikators verwendet werden und für das erste Bit dieses zweiten Signals das hochwertige Bit des Zwei-Bit-Abschnitts des Multiplikators verwendet wird, welcher in der Kaskadenstruktur vorausgeht; wobei dieser Multiplikator somit nach dem Booth-Algorithmus arbeitet.

6. Operator nach einem der Ansprüche 1 bis 5, dadurch gekennzeichnet, daß die Zahl n gleich 9 ist und daß er in einem vordiffundierten Schaltungsmuster vom Typ MLA36 integriert ist.

**Claims**

1. An elementary operator for combining a first digital input signal of at least n bits (SX, X) with a second digital input signal comprising a first and a second bit ($Y_{2j-1}$, $Y_{2j}$) in order to obtain an output digital signal with an output carry bit, said operator comprising:

— computing means (108) for complementing ($\overline{X}$) the first signal in order to offset it one step to the left (2X) while losing the high value bit and to complement ($\overline{2X}$) this first offset signal;

— a first exclusive OR-gate (112) in order to receive the first and the second bits ($Y_{2j-1}$, $Y_{2j}$) of the second digital signal and to apply a first function bit;

— an n bit adder (110);

— a first register (103) for storing the first signal and for applying it to the computing means (108) for the first signal, characterized in that it comprises:

— a third input digital signal of n bits ($RI_{j-1}$);

— a first 4 to 1 multiplexer (109) to select a signal between the first signal, the first signal in an inverted form, the first signal in an offset form, and the first signal in an offset and inverted form, under the control of the third bit of the third signal and of the first function bit, and to supply the n high value bits of the selected signal;

— a second exclusive OR-gate (115) to receive the second and the third bits of the third signal and to supply a second function bit;

— a second 2 to 1 multiplexer (111) to select a signal between the second signal and the sum supplied by the adder under the control of either of the two function bits and to supply the fourth signal;

— in that the second digital signal furthermore comprises a third bit ($Y_{2j+1}$) and an input carry bit, in that the adder is adapted to cause the addition of the third digital signal and of the signal selected by the first multiplexer with one input carry bit and to supply the sum of these signals and the output carry bit

— and in that in order to store the first signal and the first register (103) supplies a fifth digital output signal comprising the n high value bits of the first signal.

2. The operator as claimed in claim 1 characterized in that the means (108) for offsetting the first signal one step to the left (2X), for complementing ($\overline{X}$) the first signal and for complementing ($\overline{2X}$) the first offset signal furthermore comprises means to handle a supplementary overlap bit (R) forming the low value bit of the first digital input signal, same then comprising n+1 bits.

3. The operator as claimed in either of claims 1 and 2 characterized in that it comprises;

— a second register (102) to store the third signal and to supply it to the adder (110) and to the second multiplexer (111),

— a third register (101) to store a sixth output signal of n−2 bits (Y) and to supply a seventh output digital signal identical to the sixth signal;

— a first flip-flop (114) to store the third bit of the second digital signal, to apply it to the first multiplexer (109) and to supply it as an output of the operator;

— a second flip-flop (113) to store the first function bit and to apply it to the first multiplexer;

— an OR-gate (116) to receive the two function bits; and

— a third flip-flop (117) connected with the output of the OR-gate and with the control input of the second multiplexer (111).

4. The operator as claimed in claim 3 characterized in that it furthermore comprises three delay means (104 to 107) in series for delaying the clock signal, which controls the circuits of the operator in accordance with determined values in order to cause the circuits together to function in phase, this augmenting the rate of the operator at the sacrifice of a voluntary delay of operations, and in that the clock signal is directly applied to the first flip-flop (114) after a first delay to the second flip-flop (113), after a second delay to the third flip-flop (117), after a third delay to the first register (103), and after a fourth delay to the second and fourth registers (101 and 102).

5. The operator as claimed in any one of the claims 1 through 4 characterized in that it furthermore comprises a connection making it possible to use the third bit ($Y_{2j+1}$) of the second input digital signal as an input carry bit, this making it possible to cause the elementary operator to function as an (n−2)×2 multiplier by using a multiplicand formed of n−2 signed bits as the first input digital signal, said n−2 bits being completed by two high value bits repeating the sign, by using a number forming the intermediate result of a possible cascade structure as the third input digital signal, by using the two bits of a multiplier as the two last bits of the second input digital signal, and by using the bit of high value of the preceding two bit slice of the multiplier as the first bit of this second signal, in the cascade structure; said multiplier thus functioning in accordance with Booth's algorithm.

6. The operator as claimed in any one of the claims 1 through 5 characterized in that the number n is equal to 9 and in that it is integrated in a prediffused circuit of the type MLA36.

Y  RIj-1  SX  X  R

φ6  φ9  φ2  φ7

REGISTRE  REGISTRE  REGISTRE

101  102  103  105  106  107

RETARD  RETARD  RETARD  RETARD  H

104

φ10

108  X  X̄  2X  2X̄  φ9  BASCULE  114

MULTIPLEXEUR  Y₂ⱼ₊₁

109

φ9  BASCULE  OU EXCLUSIF  112  Y₂ⱼ₋₁

113  Y₂ⱼ

RETENUE  ADDITIONNEUR  RETENUE  OU EXCLUSIF  Y₂ⱼ₋₁

φ7  110  115

116

MULTIPLEXEUR  BASCULE

φ9  111  117

Sj

X  Y₂ⱼ₊₁

0 112 768

Fig.1

**0 112 768**

Fig.2

2

Fig.3

Fig.4

Fig.5

Fig.6

Fig.7

Fig.8

4

RI ──o│      │── Q1
     │   Σ  │── Q2
A0 ──│      │── Q3
B0 ──│      │── Q4
     ├──────┤
A1 ──│      │── Q11
     │      │── Q12
B1 ──│      │── Q13
     │      │── Q14
     ├──────┤
           o── RS

Fig.9

I1 ──│      │── Q1
     │  ≥1 │
I2 ──│      │o── Q2

Fig.10

I1 ──│      │
I2 ──│      │── Q1
I3 ──│  ≥1 │
I4 ──│      │o── Q2
I5 ──│      │

Fig.11

I □──│      │── Q1
     │  ≥1 │
     │      │o── Q2

Fig.12

5

Fig. 13

Fig. 14

Fig. 15

Fig. 16

0 112 768